# EUROPEAN PATENT SPECIFICATION

(11) **EP 0 702 779 B1**
(45) Date of publication and mention of the grant of the patent: **15.09.1999**
(21) Application number: 94904781.5
(22) Date of filing: 13.01.1994
(51) Int. Cl.: G01B 5/00

(54) **SYSTEM COMPRISING A POSITION INDICATOR AND METHOD FOR SCANNING A SURFACE BY HAND USING A SENSOR**
SYSTEM MIT EINER POSITIONSANZEIGE UND METHODE ZUM ABTASTEN EINER OBERFLÄCHE VON HAND MIT EINEM SENSOR
SYSTEME COMPRENANT UN INDICATEUR DE POSITION ET PROCEDE D'EXPLORATION D'UNE SURFACE A LA MAIN A L'AIDE D'UN DETECTEUR

(43) Date of publication of application: 27.03.1996
(73) Proprietor: Röntgen Technische Dienst B.V., 3046 NC Rotterdam (NL)
(72) Inventor: DIJKSTRA, Frederik, Hendrik, NL-4731 WS Oudenbosch (NL); DIJKSTRA, Durk, NL-2716 BT Zoetermeer (NL)
(74) Representative: Smulders, Theodorus A.H.J., Ir.
(86) International application number: NL9400009
(87) International publication number: WO9519540

(56) References cited:
- WO-A-84/00208
- WO-A-88/00776
- DE-C- 3 833 203
- US-A- 4 304 133
- US-A- 4 455 748
- US-A- 4 506 336
- US-A- 4 922 618

## Description

The invention relates to a system comprising a position indicator for obtaining position-representing signals containing information about the position of a sensor with which a surface of for instance pipes, drums and tanks can be scanned, the position indicator comprising an element movably connected with a base body of the position indicator, of which element, during operation, a part to which the sensor can be connected is located outside the base body of the position indicator, a calculation unit, and detection means connected to the calculation unit for detecting an angular displacement of the element round a first axis, not extending in a longitudinal direction of said part of the element, and for detecting a change of distance between a point of said part of the element and a point of the base body to obtain the position-representing signals.

Such a system is known from US-A-4.922.618. The known system is used as a polar co-ordinate digitizer for digitizing two dimensional forms or curves. The display will show, in use, the curve along which the element has moved by hand. The system does not comprise a sensor. The object of the invention is to provide an improved system for scanning a surface by means of a sensor.

The invention is characterized in that the system further comprises a sensor connected with the element of the position indicator and a display connected with the calculation unit wherein information generated by the sensor and position representing signals generated by the position indicator are fed to the calculation unit whereby, in use, the registered positions are shown on the display with the measuring results of the surface obtained by the sensor thereby enabling a person handling the sensor to see which positions of the surface have been scanned and which positions are still to be scanned.
The effect thus achieved is that a surface can be manually scanned by means of a sensor.

It is most advantageous that a person handling the sensor will be able to see on the display which positions of the surface have been scanned and which positions still have to be scanned. Furthermore, it is most advantageous that this person can also see the scanning results on the display.

The position-representing signals can be used to detect, register and/or display which parts of the surface have been scanned and which parts are still to be scanned. The measuring results obtained by means of the sensor are also further processed together and in combination with associated position coordinates obtained from the position-representing signals. For this purpose, the measuring results are fed to the calculating unit together with the position-representing signals, which calculating unit conveniently displays the measuring results in color or shades of grey in the form of a plot of the scanned surface. The position coordinates can be cartesian or for instance polar coordinates deduced from the position-representing signals.

It is known to manually scan surfaces by means of a sensor. Such a system is flexible and economically advantageous, but has as a drawback that the measuring results cannot be displayed in the form of a plot. Hence, the position indicator according to the invention combines the advantages of an automated system and a manual system.

US-A-4.304.133 discloses a system for scanning a surface manually. However, the system does not comprise a display for displaying the scanning results in combination with parts of the surface which have been scanned.

In accordance with a very advantageous embodiment of the invention, the element comprises a pullcord of which a free end can be pulled outside the base body, the position indicator further comprising tension means for tensioning a part of the pullcord that is pulled outside the base body and to which the sensor can be attached. The sensor can be attached to the pullcord. Such a position indicator is particularly light and flexible. The base body is for instance placed on the surface to be scanned, whereupon the sensor, moved by hand, causes the pullwire, which is held taut, to move. The movements of the wire (length and direction) are measured and converted into the position-representing signals based on polar coordinates. If so desired, a calculating unit can convert these signals into a rectangular coordinate system.

The position indicator preferably comprises a reel on which the pullcord can be wound. This has as an advantage that the position indicator is particularly compact when it is not used, because the pullwire will then be wound up. Moreover, damage is practically impossible. Preferably, the reel is of such design that the pullcord is capable of coiling on the reel in a single layer winding. For this purpose, in accordance with a particular embodiment, the reel is provided with guide grooves enabling the pullcord to be wound up in a single layer.

In accordance with a practical embodiment, the tension means exert a moment of force on the reel in a rotative direction according to which the pullcord is wound up by the reel. In this connection, the tension means may for instance comprise a spring motor.

More particularly, the spring motor comprises a first and second spring-loaded drum and a leaf spring which, in a first extreme position, is wound substantially round the first spring-loaded drum and, in a second extreme position, substantially round the second spring-loaded drum, such that the leaf spring exerts a moment of force in order to coil round the first spring-loaded drum. The moment of force generated by such a spring motor is at least substantially constant.

In accordance with a particular embodiment, the tension means further comprise a first and second intermediate reel and a drive cord which, in a first extreme position, is wound substantially round the first intermediate reel and, in a second extreme position, substantially round the second intermediate reel, the first intermediate reel being driven by the spring motor and the second intermediate reel driving the reel, as a result of which the pullcord is wound round the reel at an at least substantially constant force. The effect thus achieved is that the tension in the pullcord is always at least substantially constant, independent of the length through which it has been pulled out. Not only is this pleasant to the user, but it also enables the pullwire to be accurately dimensioned so that, on the one hand, it will not stretch out during use and, on the other, it is not unnecessarily thick.

In accordance with another aspect of the invention, the detection means comprise a rotation pickup having two parts that are rotatable relative to one another, a first part being attached to the base body and a second part being attached to the reel. The rotation pickup may for instance be of a known type counting the number of revolutions or parts of revolutions of the reel. Of course, this number is a measure for the length through which the wire is pulled out or wound up.

In accordance with an alternative embodiment of the invention, the detection means comprise a rotation pickup having two parts that are rotatable relative to one another, a first part being attached to the base body and a second part being attached to the first intermediate reel, as a result of which the measured rotative movement of the second reel comprises a linear relation with a distance through which the pullcord is pulled out.

In accordance with an advantageous embodiment, the position indicator further comprises a cord guide block mounted on the base body for rotation round the above-mentioned axis, with a guide wheel along which the pullcord entering the base body is fed to the reel, the part of the pullcord that is pulled outside the base body determining the rotative position of the guide block. This allows the guide block to follow the direction in which the cord is moved in a simple manner.

Preferably, a part of the pullcord extending between the guide wheel and the reel at least substantially coincides with this first axis to enable the rotation of the guide block relative to the base body in a simple manner. The cord guide block may further comprise a base part connected with the base body for rotation round the first axis, to which base part the wheel is attached, and a cord guide part through which the cord enters the base body, the cord guide part being connected with the base part for rotation round a second axis and the second axis being oriented perpendicularly relative to the first axis. This permits the cord to be moved up and down as well, during use, without the position indicator being damaged or not being capable of operating properly.

In this connection, the second axis is for instance oriented perpendicularly relative to a longitudinal direction of the cord guide part.

For obtaining the position-representing signals, the detection means can for instance detect an angular displacement round the first axis of the cord guide block relative to the base body. More particularly, the detection means for this purpose comprise a rotation pickup having two parts that are rotatable relative to one another, a first part of which is attached to the base body and a second part of which is attached to the cord guide block.

In accordance with the invention, a method for scanning a surface of for instance pipes, drums and tanks by means of a sensor, the sensor being moved by hand, is characterized in that the positions of parts of the surface that are scanned by the sensor are registered;
- the registered positions are shown on a display thereby enabling a person handling the sensor to see which positions of the surface have been scanned and which positions are still to be scanned; and
- the registered positions are shown on the display with the measuring results of the surface obtained by the sensor.
In particular, these surfaces are scanned ultra sonically.

The invention will be further explained hereinafter with reference to the accompanying drawings, wherein:
Fig. 1 is a partly cutaway side elevation of a position indicator;
Fig. 2 is a side elevation of the position indicator of Fig. 1 from a different direction, with a part of the base body left out;
Fig. 3 is a partly cutaway top plan view of the position indicator of Fig. 1; and
Fig. 4 shows an embodiment of a system according to the invention comprising the position indicator of Fig. 1, a sensor and a computer.

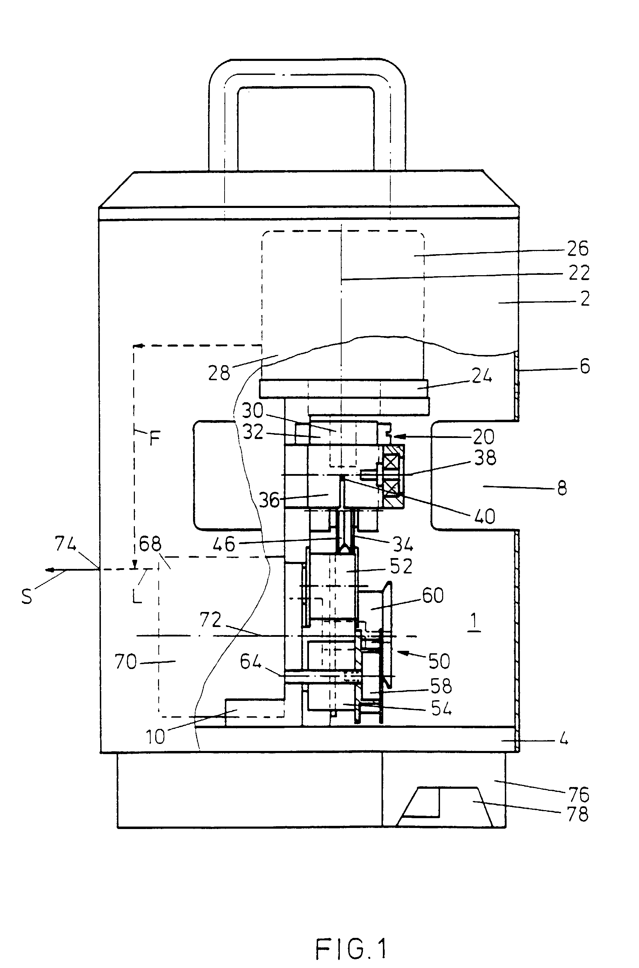

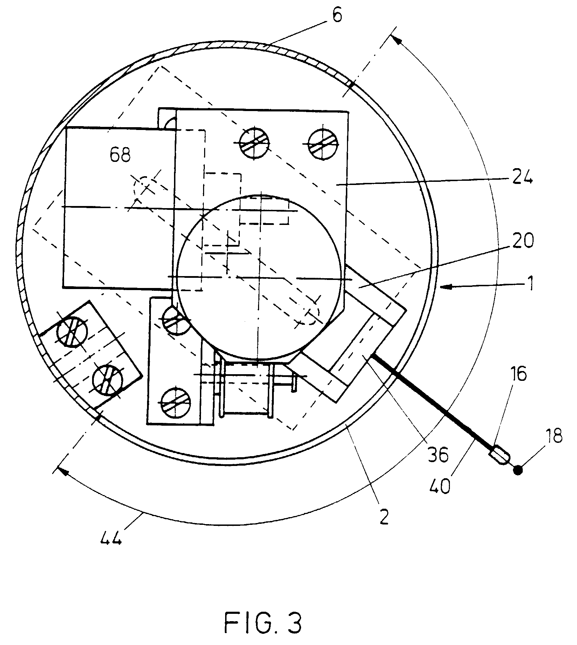

In Figs 1-3, reference numeral 1 designates an exemplary embodiment of a position indicator . The position indicator 1 comprises a base body 2 having a bottom plate 4. A cylindrical sidewall 6 of the base body 2 has an opening 8 extending in axial direction of the cylindrical sidewall through an angle of approximately 180 degrees. A frame 10 that is part of the base body 2 is fixedly connected with the bottom plate 4 and comprises among other things a reel 12 having a pullcord 14 wound thereon.

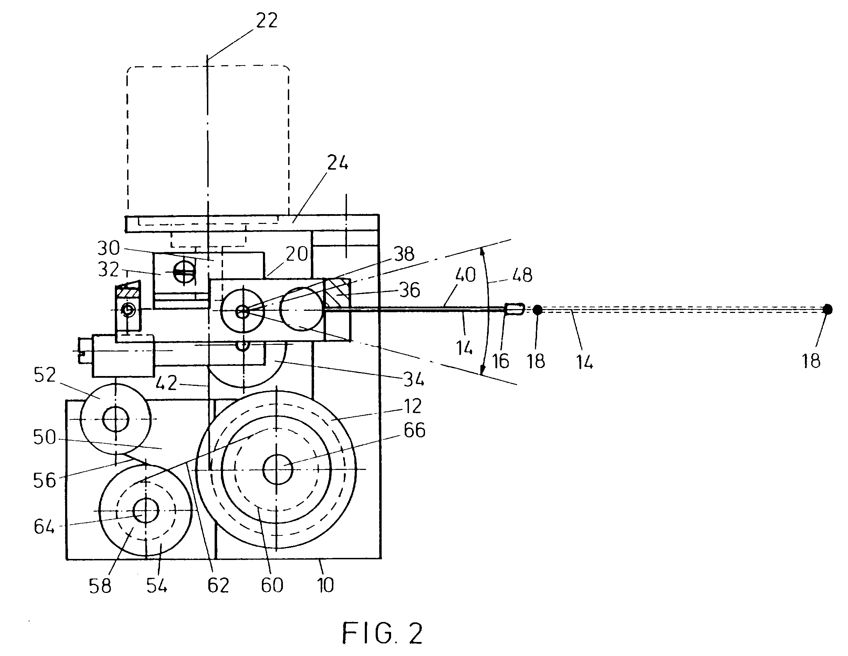

A free end 16 of the pullcord 14 having a knot 18 is located outside the base body 2 and can be pulled away from the base body 2 (shown in dotted lines in Fig. 2) with the pullcord 14 unwinding from the reel 12. Under a top piece 24 of the frame 10, a cord guide block 20 is connected with the top piece 24 for rotation around a first vertical axis 22. For this purpose, a rotation pickup 26 has its housing 28 fixedly connected with the top piece 24, while the cord guide block 20 is connected with a rotatable shaft 30 of the rotation pickup 26. The rotation pickup 26 is of a generally known type and generates electric signals corresponding to a rotation of the shaft 30 relative to the base body 28. In this manner, pulses can for instance be generated for each rotation of the shaft 30 through an angle of 1/10 degree. By counting the pulses it can be determined through what angle the shaft 30 has been rotated. The direction of rotation can for instance be indicated by the length of the pulses or otherwise. Obviously, rotation pickups of another type can be used as well, such as for instance angular velocity pickups. After integration of the signals issued by such a pickup, an angle of rotation can be deduced as well. In addition, rotation pickups can be used that issue a signal directly related to an associated rotative position of the shaft 30. However, for the invention it is not inportant which type of rotation pickup is used.

The cord guide block 20 consists of a base part 32 having a wheel 34 mounted thereon and a cord guide part 36 through which the pullcord 14 enters the base body 2 via the opening 8. The cord guide part 36 is connected with the base part 32 for rotation around a second axis 38 and the second axis 38 is perpendicularly oriented relative to the first shaft 30. The cord guide part 36 comprises a hollow, tubular part 40 through which the pullcord 14 is passed to the reel 12 via the wheel 34.

The wheel 34 and the reel 12 are positioned relative to each other such that a part 42 of the pullcord, located between the wheel 34 and the reel 12, coincides with the first shaft 30. As a result, the pullcord 14 can be moved along a first path 44 in a horizontal plane without the reel 12 rotating due to this movement.

Further, the extension of the tube 40 touches a guide surface 46 of the wheel 34 and crosses the axis 38. As a result, the pullcord 14 can be moved along a second path 48 in a vertical plane without the reel 12 rotating due to this movement. This means that the reel 12 only rotates when the pullcord is moved in a radial direction relative to the cylindrical base body 2.

Tension means in the form of a spring motor 50 exert a moment of force on the reel 12 in a rotative direction acccording to which the pullcord 14 is wound up by the reel 12. The spring motor 50 comprises a first and second spring-loaded drum 52, 54 and a leaf spring 56 which in a first extreme position is wound at least substantially round the first spring-loaded drum 52 and in a second extreme position at least substantially round the second spring-loaded drum 54, such that the leaf spring exerts an at least practically constant moment of force to wind itself round the first spring-loaded drum 52. For this purpose, the first and second spring-loaded drums 52, 54 are rotatably connected with the frame 10.

There are further provided a first and second intermediate reel 58, 60 and a drive cord 62, in a first extreme position wound at least substantially on the first intermediate reel 58 and in a second extreme position substantially on the second intermediate reel 60. The first intermediate reel 58 is directly driven by the spring motor 50, the second spring-loaded drum 54 and the first intermediate reel being mounted on the same rotary shaft 64. The second intermediate reel 60 directly drives the reel 12, both reels being mounted on a rotary shaft 66. The arrangement is such that the pullcord 14 is wound round the reel 12 at an at least substantially constant force.

A second rotation pickup 68 has its housing 70 fixedly connected with the frame 10 and its rotary shaft 66 connected with the reel 12. The second rotation pickup may be of the same type as the first rotation pickup 26. In this manner, pulses can for instance be generated for each rotation of the shaft 66 through an angle of 1/10 degree. By counting the pulses, it can be determined through what angle (which may be greater than 360 degrees) the shaft 66 has been rotated. Of course, it is also possible to attach the second rotation pickup 68 by its rotary shaft to the first intermediate reel 58, so that the measured angular movement comprises a linear relation with a distance through which the pullcord is pulled cut.

The position-representing signals S generated by the two rotation pickups 26, 68 are presented to an output 74 for further processing. The position indicator 1 further comprises a magnetic bottom plate 76 having a groove 78, enabling the position indicator 1 to be easily installed on a metal plate of tube.

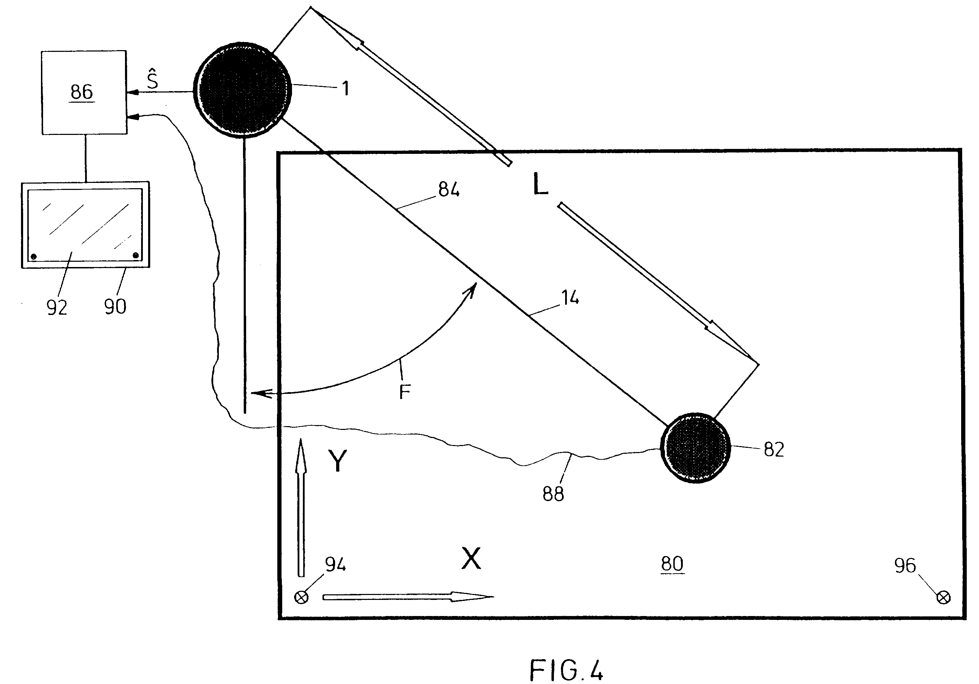

The operation of the position indicator 1 can be further explained with reference to a practical example in a system in accordance with the invention, as schematically shown in Fig. 4. Fig. 4 is a top plan view of a metal surface 80 that is to be scanned by means of an ultrasonic sensor 82, for instance to check the thickness of the plate 80 at different positions, to check the plate 80 for corrosion and/or hair cracks. For this purpose, the ultrasonic sensor 82 is attached to the wire 14 of the position indicator 1. In this example, the first shaft 30 of the position indicator 1 is perpendicular to the plate 80. If the sensor 82 is manually moved along the plate 80, the length L of the part 84 of pullwire 14, located in a straight-stretched condition outside the base body 2, will generally vary. As a result of this variation, the reel 12 will wind up or unwind and the rotation pickup 68 will issue signals L that are dependent on this variation. The width of the reel 12 is dimensioned such that the pullcord can be wound up in a single layer. This has as an advantage that the signals L are directly proportional to variations in the length L. For this purpose, the reel is preferably provided with guide grooves enabling the pullcord to be wound up in a single layer. Likewise, this movement will generally result in a change of the angle F. This change in angle F will be accurately followed by the narrow tube 40 and accordingly by the cord guide block 20. Hence, the rotation pickup 26 will issue signals F that are dependent on this variation. Consequently, if rotation pickups are used that produce a pulse for each rotative change of for instance 1/10 degree, as discussed hereinabove, the signals L, F will have no absolute meaning but will be a measure for a change of position of the sensor 82 on the plate 80. Here, the signals L, F together form position-representing signals S in the form of (changes in) polar coordinates that are fed to a calculating unit 86.

By means of the line 88, the information generated by the sensor 82 is fed to the calculating unit as well. The information from the sensor 82 is processed by the calculating unit and displayed in color by means of a display 90. The display shows a plot 92 of the plate 80 with the local thickness of the plate shown in a color related thereto. Accordingly, a person scanning the plate by hand also sees on the display which parts of the plate have been scanned and which parts of the plate are still to be scanned, if any.

For calibrating the position indicator 1, the sensor 82 may for instance first be placed on the predetermined position 94 of the plate. By the calculating unit, the rectangular coordinates (0,0) are assigned to this point. subsequently, the sensor 82 is moved to the predetermined position 96. The distance between the positions 94, 96 is measured by hand and inputted in the calculating unit, which assigns the position coodinates (D,0) to this point. On the basis of the position-representing signals associated with the points (0,0) and (D,0), the calculating unit is capable of calculating in a known manner the position coordinates (X,Y) associated with any position representing signals.

## Claims

1. A system comprising a position indicator (1) for obtaining position-representing signals containing information about the position of a sensor (82) with which a surface of for instance pipes, drums and tanks (80) can be scanned, the position indicator (1) comprising an element (18,14) movably connected with a base body (2) of the position indicator (1), of which element (18, 14), during operation, a part to which the sensor can be connected is located outside the base body (2) of the position indicator, a calculation unit (86), and detection means (26, 28) connected to the calculation unit for detecting an angular displacement of the element (18, 14) round a first axis (22) , not extending in a longitudinal direction of said part (14, 18) of the element (14, 18), and for detecting a change of distance between a point (18) of said part (14, 18) of the element (14, 18) and a point of the base body to obtain the position-representing signals (L, F), characterized in that the system further comprises a sensor (82) connected with the element (18, 14) of the position indicator (1) and a display (90) connected with the calculation unit (86) wherein information generated by the sensor (82) and position representing signals generated by the position indicator (1) are fed to the calculation unit (86) whereby, in use, the registered positions are shown on the display (90) with the measuring results of the surface obtained by the sensor (82) thereby enabling a person handling the sensor (82) to see which positions of the surface have been scanned and which positions are still to be scanned.

2. A system according to claim 1, characterized in that the element comprises a pullcord (14) of which a free end (16) can be pulled outside the base body, the position indicator further comprising tension means (50) for tensioning a part of the pullcord that is pulled outside the base body and to which the sensor can be attached.

3. A system according to claim 2, characterized in that it comprises a reel (12) on which the pullcord can be wound.

4. A system according to claim 3, characterized in that the reel (12) is provided with guide grooves enabling the pullcord to be wound up in a single layer.

5. A system according to claim 3 or 4, characterized in that the tension means (50) exert a moment of force on the reel (12) in a rotative direction according to which the pullcord (14) is wound up by the reel.

6. A system according to claim 5, characterized in that the tension means comprise a spring motor (50).

7. A system according to claim 6, characterized in that the spring motor (50) comprises a first and second spring-loaded drum (52, 54) and a leaf spring (56) which, in a first extreme position, is wound substantially on the first spring-loaded drum (52) and, in a second extreme position, substantially on the second spring-loaded drum (54), such that the leaf spring (56) exerts a moment of force in order to coil on the first spring-loaded drum.

8. A system according to claim 6 or 7, characterized in that the tension means further comprise a first and second intermediate reel (58, 60) and a drive cord (62) which, in a first extreme position, is wound substantially on the first intermediate reel and, in a second extreme position, substantially on the second intermediate reel, the first intermediate reel (58) being driven by the spring motor and the second intermediate reel (60) driving the reel (12).

9. A system according to any one of preceding claims 2-8, characterized in that the detection means comprise a rotation pickup (68) having two parts that are rotatable relative to one another, a first part being attached to the base body (2) and a second part being attached to the reel (12) for detecting a rotative movement of the reel (12).

10. A system according to claim 8, characterized in that the detection means comprise a rotation pickup (68) having two parts that are rotatable relative to one another, of which a first part is attached to the base body (2) and a second part is attached to the first intermediate reel (58) for detecting a rotative movement of the first intermediate reel.

11. A system according to any one of preceding claims 2-10, characterized in that it comprises a cord guide block (20) mounted on the base body (2) for rotation round said first axis (22),with a guide wheel (34) along which the pullcord entering the base body is fed to the reel (12), the part of the pullcord that is pulled outside the base body determining the rotative position of the guide block (20) relative to the first axis (22).

12. A system according to claim 11, characterized in that a part of the pullcord (14) extending between the guide wheel and the reel at least substantially coincides with said first axis.

13. A system according to claim 12, characterized in that the cord guide block (20) comprises a base part (32) connected with the base body (2) for rotation round the first axis (22), to which base part the wheel (34) is attached, and a cord guide part (36) through which the cord (14) enters the base body (2), the cord guide part (36) being connected with the base part (2) for rotation round a second axis (38) and the second axis (38) being oriented perpendicularly relative to the first axis (22).

14. A system according to claim 13, characterized in that the second axis (38) is oriented perpendicularly relative to a longitudinal direction of the cord guide part (36).

15. A system according to any one of preceding claims 11-14, characterized in that the detection means (26) detect an angular displacement round the first axis (22) of the cord guide block (20) relative to the base body.

16. A system according to claim 14, characterized in that the detection means (26, 28) comprise a rotation pickup (16) having two parts that are rotatable relative to one another, a first part of which is attached to the base body (2) and a second part of which is attached to the cord guide block (20).

17. A method for scanning a surface of for instance pipes, drums and tanks by means of a sensor (82), the sensor (82) being moved by hand, characterized in that the positions of parts of the surface that are scanned by the sensor (82) are registered;
- the registered positions are shown on a display (90), thereby enabling a person handling the sensor (82) to see which positions of the surface (80) have been scanned and which positions are still to be scanned; and
- the registered positions are shown on the display with the measuring results of the surface obtained by the sensor (82).

## Patentansprüche

1. System mit einem Positionsindikator (1) zum Erhalt positionsrepräsentierender Signale, die Information über die Position eines Sensors (82) enthalten, mit dem eine Oberfläche z.B. von Rohren, Tonnen oder Tanks (80) abgetastet werden kann, wobei der Positionsindikator (1) ein Element (18,14) aufweist, das bewegbar mit einem Basiskörper (2) des Positionsindikators (1) verbunden ist, wobei während des Betriebs ein Teil des Elementes (18,14), mit dem der Sensor verbunden werden kann, außerhalb des Basiskörpers (2) des Positionsindikators angeordnet ist, und mit einer Recheneinheit (86) und mit der Recheneinheit verbundenen Detektionseinrichtungen (26,28) zum Detektieren einer Winkelverschiebung des Elementes (18,14) um eine erste Achse (22), die nicht in der Längsrichtung des besagten Teiles (14,18) des Elementes (14,18) verläuft, und zum Detektieren einer Veränderung des Abstandes zwischen einem Punkt (18) des Teiles (14,18) des Elementes (14,18) und einem Punkt des Basiskörpers zwecks Erhalt der positionsrepräsentierenden Signale (L,F),
dadurch gekennzeichnet, daß das System ferner einen Sensor (82), der mit dem Element (18,14) des Positionsindikators (1) verbunden ist, und eine Anzeigevorrichtung (90) aufweist, die mit der Recheneinheit (86) verbunden ist, wobei durch den Sensor (82) erzeugte Information und durch den Positionsindikator (1) erzeugte positionsrepräsentierende Signale an die Recheneinheit (86) übermittelt werden, wobei bei Betrieb an der Anzeigevorrichtung (90) die registrierten Positionen zusammen mit den durch den Sensor (82) erhaltenen Meßergebnissen der Oberfläche angezeigt werden und dadurch eine den Sensor (82) handhabende Person sehen kann, welche Positionen der Oberfläche abgetastet worden sind und welche Positionen noch abgetastet werden müssen.

2. System nach Anspruch 1, dadurch gekennzeichnet, daß das Element eine Zugschnur (14) aufweist, von der ein freies Ende (16) aus dem Basiskörper herausgezogen werden kann, wobei der Positionsindikator ferner eine Spannvorrichtung (50) aufweist, die zum Spannen eines aus dem Basiskörper herausgezogenen Teils der Zugschnur vorgesehen ist und an der der Sensor befestigt werden kann.

3. System nach Anspruch 2, gekennzeichnet durch eine Spule (12), auf die die Zugschnur aufgewickelt werden kann.

4. System nach Anspruch 3, dadurch gekennzeichnet, daß die Spule (12) mit Führungsnuten versehen ist, mittels derer die Zugschnur in einer einzigen Lage aufgewickelt werden kann.

5. System nach Anspruch 3 oder 4, dadurch gekennzeichnet, daß die Spannvorrichtung (50) in einer Drehrichtung, in der die Zugschnur (14) von der Spule aufgewickelt wird, ein Kraftmoment auf die Spule (12) ausübt.

6. System nach Anspruch 5, dadurch gekennzeichnet, daß die Spannvorrichtung einen Federmotor (50) aufweist.

7. System nach Anspruch 6, dadurch gekennzeichnet, daß der Federmotor (50) eine erste und eine zweite federbelastete Walze (52,54) und eine Blattfeder (56) aufweist, die in einer ersten Extremposition im wesentlichen auf die erste federbelastete Walze (52) gewickelt ist und in einer zweiten Extremposition im wesentlichen auf die zweite federbelastete Walze (54) gewickelt ist, derart, daß die Blattfeder (56) ein Kraftmoment zum Aufwickeln auf die erste federbelastete Walze ausübt.

8. System nach Anspruch 6 oder 7, dadurch gekennzeichnet, daß die Spannvorrichtung ferner eine erste und eine zweite Zwischenspule (58,60) und eine Antriebsschnur (62) aufweist, die in einer ersten Extremposition im wesentlichen auf die erste Zwischenspule gewickelt ist und in einer zweiten Extremposition im wesentlichen auf die zweite Zwischenspule gewickelt ist, wobei die erste Zwischenspule (58) durch den Federmotor angetrieben ist und die zweite Zwischenspule (60) die Spule (12) antreibt.

9. System nach einem der vorhergehenden Ansprüche 2 bis 8, dadurch gekennzeichnet, daß die Detektionseinrichtungen einen Drehsensor (68) mit zwei relativ zueinander drehbaren Teilen aufweisen, wobei ein erster Teil an dem Basiskörper (2) befestigt ist und ein zweiter Teil an der Spule (12) befestigt ist, um eine Drehbewegung der Spule (12) zu detektieren.

10. System nach Anspruch 8, dadurch gekennzeichnet, daß die Detektionseinrichtungen einen Drehsensor (68) mit zwei relativ zueinander drehbaren Teilen aufweisen, wobei ein erster Teil an dem Basiskörper (2) befestigt ist und ein zweiter Teil an der ersten Zwischenspule (58) befestigt ist, um eine Drehbewegung der ersten Zwischenspule zu detektieren.

11. System nach einem der vorhergehenden Ansprüche 2 bis 10, gekennzeichnet durch einen Schnurführungsblock (20), der um die erste Achse (22) drehbar an dem Basiskörper (2) befestigt ist und ein Führungsrad (34) aufweist, entlang dessen die in den Basiskörper einlaufende Zugschnur der Spule (12) zugeführt wird, wobei der Teil der Zugschnur, der aus dem Basiskörper herausgezogen ist, die Drehposition des Führungsblocks (20) relativ zu der ersten Achse (22) bestimmt.

12. System nach Anspruch 11, dadurch gekennzeichnet, daß ein Teil der Zugschnur (14), der sich zwischen dem Führungsrad und der Spule erstreckt, mindestens im wesentlichen mit der ersten Achse übereinstimmt.

13. System nach Anspruch 12, dadurch gekennzeichnet, daß der Schnurführungsblock (20) einen Basisteil (32), der um die erste Achse (22) drehbar mit dem Basiskörper (2) verbunden ist und an dem das Rad (34) befestigt ist, und einen Schnurführungsteil (36) aufweist, durch den hindurch die Schnur (14) in den Basiskörper (2) eintritt, wobei der Schnurführungsteil (36) um eine zweite Achse (38) drehbar mit dem Basiskörper (2) verbunden ist und die zweite Achse (38) relativ zu der ersten Achse (22) rechtwinklig ausgerichtet ist.

14. System nach Anspruch 13, dadurch gekennzeichnet, daß die zweite Achse (38) relativ zu einer Längsrichtung des Schnurführungsteils (36) rechtwinklig ausgerichtet ist.

15. System nach einem der vorhergehenden Ansprüche 11 bis 14, dadurch gekennzeichnet, daß die Detektionseinrichtungen (28) eine um die erste Achse (22) erfolgende Winkelverschiebung des Schnurführungsblocks (20) relativ zu dem Basiskörper detektieren.

16. System nach Anspruch 14, dadurch gekennzeichnet, daß die Detektionseinrichtungen (26,28) einen Drehsensor (16) mit zwei relativ zueinander drehbaren Teilen aufweisen, wobei ein erster Teil des Drehsensors an dem Basiskörper (2) befestigt ist und ein zweiter Teil des Drehsensors an dem Schnurführungsblock (20) befestigt ist.

17. Verfahren zum Abtasten einer Oberfläche z.B. von Rohren, Tonnen oder Tanks mittels eines Sensors (82), wobei der Sensor (82) von Hand bewegt wird, dadurch gekennzeichnet,
- daß die Positionen von Teilen der Oberfläche, die durch den Sensor (82) abgetastet werden, registriert werden;
- die registrierten Positionen in einer Anzeigevorrichtung (90) angezeigt werden, so daß eine den Sensor (82) handhabende Person sehen kann, welche Positionen der Oberfläche (80) abgetastet worden sind und welche Positionen noch abgetastet werden müssen; und
- in der Anzeigevorrichtung die registrierten Positionen zusammen mit den durch den Sensor (82) erhaltenen Meßergebnissen der Oberfläche angezeigt werden.

## Revendications

1. Système comprenant un indicateur de position (1) permettant d'obtenir des signaux représentant la position qui contiennent des informations relatives à la position d'un capteur (82) avec lequel on peut explorer la surface de tuyaux, de tambours et de réservoirs (80) par exemple, l'indicateur de position (1) comprenant un élément (18, 14) relié de façon mobile à un corps de base (2) de l'indicateur de position (1), une partie de cet élément (18, 14), à laquelle le capteur peut être relié, étant placée, pendant le fonctionnement, à l'extérieur du corps de base (2) de l'indicateur de position, une unité de calcul (86), et un moyen de détection (26, 28) relié à l'unité de calcul et servant à déterminer le déplacement angulaire de l'élément (18, 14) autour d'un premier axe (22), ne s'étendant pas suivant la direction longitudinale de ladite partie (14, 18) de l'élément (14, 18), et à déterminer la variation de distance entre un point (18) de ladite partie (14, 18) de l'élément (14, 18) et un point du corps de base de façon qu'on obtienne les signaux (L, F) représentant la position, le système étant caractérisé en ce qu'il comprend en outre un capteur (82) relié à l'élément (18, 14) de l'indicateur de position (1) et un dispositif d'affichage (90) relié à l'unité de calcul (86), où des informations produites par le capteur (82) et des signaux représentant la position qui sont produits par l'indicateur de position (1) sont envoyés à l'unité de calcul (86), de sorte que, en utilisation, les positions enregistrées sont représentées sur le dispositif d'affichage (90) avec les résultats de mesure de la surface qui sont obtenus par le capteur (82), ce qui permet à la personne manipulant le capteur (82) de voir quelles positions de la surface ont été explorées et quelles positions sont encore à explorer.

2. Système selon la revendication 1, caractérisé en ce que l'élément comprend un cordon à tirer (14) dont une extrémité libre (16) peut être tirée à l'extérieur du corps de base, l'indicateur de position comprenant en outre un moyen de mise sous tension mécanique (50) servant à mettre sous tension mécanique la partie du cordon à tirer qui est tirée à l'extérieur du corps de base et à laquelle le capteur peut être attaché.

3. Système selon la revendication 2, caractérisé en ce qu'il comprend une bobine (12) sur laquelle le cordon à tirer peut être enroulé.

4. Système selon la revendication 3, caractérisé en ce que la bobine (12) est dotée de rainures de guidage permettant que le cordon à tirer soit enroulé en une unique couche.

5. Système selon la revendication 3 ou 4, caractérisé en ce que le moyen de mise sous tension mécanique (50) exerce un moment de force sur la bobine (12) dans la direction de rotation suivant laquelle le cordon à tirer (14) est enroulé par la bobine.

6. Système selon la revendication 5, caractérisé en ce que le moyen de mise sous tension mécanique comprend une commande par ressort (50).

7. Système selon la revendication 6, caractérisé en ce que la commande par ressort (50) comprend un premier et un deuxième tambour (52, 54) chargés par ressort et une lame de ressort (56) qui est enroulée, dans une première position extrême, sensiblement sur le premier tambour chargé par ressort (52) et, dans une deuxième position extrême, sensiblement sur le deuxième tambour chargé par ressort (54), de façon que la lame de ressort (56) exerce un moment de force visant à assurer le bobinage sur le premier tambour chargé par ressort.

8. Système selon la revendication 6 ou 7, caractérisé en ce que le moyen de mise sous tension mécanique comprend en outre une première et une deuxième bobine (58, 60) intermédiaires et un cordon d'entraînement (62) qui est enroulé, dans une première position extrême, sensiblement sur la première bobine intermédiaire et, dans une deuxième position extrême, sensiblement sur la deuxième bobine intermédiaire, la première bobine intermédiaire (58) étant entraînée par la commande par ressort et la deuxième bobine intermédiaire (60) entraînant la bobine (12).

9. Système selon l'une quelconque des revendications 2 à 8 précédentes, caractérisé en ce que le moyen de détermination comprend un détecteur de rotation (68) possédant deux parties qui peuvent tourner l'une par rapport à l'autre, une première partie étant attachée au corps de base (2) et une deuxième partie étant attachée à la bobine (12) afin de permettre la détection d'un mouvement de rotation de la bobine (12),

10. Système selon la revendication 8, caractérisé en ce que le moyen de détermination comprend un détecteur de rotation (68) possédant deux parties qui peuvent tourner l'une par rapport à l'autre, dont une première partie est attachée au corps de base (2) et une deuxième partie est attachée à la première bobine intermédiaire (58) afin de permettre la détection d'un mouvement de rotation de la première bobine intermédiaire.

11. Système selon l'une quelconque des revendications 2 à 10 précédentes, caractérisé en ce qu'il comprend un bloc (20) de guidage de cordon qui est monté sur le corps de base (2) afin de pouvoir tourner sur ledit premier axe (22), avec une roue de guidage (34) le long de laquelle le cordon à tirer entrant dans le corps de base est envoyé sur la bobine (12), la partie du cordon à tirer qui est tirée à l'extérieur du corps de base déterminant la position de rotation du bloc de guidage (20) par rapport au premier axe (22).

12. Système selon la revendication 11, caractérisé en ce qu'une partie du cordon à tirer (14) s'étendant entre la roue de guidage et la bobine coïncide au moins sensiblement avec ledit premier axe.

13. Système selon la revendication 12, caractérisé en ce que le bloc (20) de guidage de cordon comprend une partie de base (32) reliée au corps de base (2) afin de pouvoir tourner sur le premier axe (22), à laquelle partie de base la roue (34) est attachée, et une partie de guidage de cordon (36) par l'intermédiaire de laquelle le cordon (14) entre dans le corps de base (2), la partie (36) de guidage de cordon étant reliée avec la partie de base (2) afin de pouvoir tourner sur un deuxième axe (38), le deuxième axe (38) étant orienté perpendiculairement au premier axe (22).

14. Système selon la revendication 13, caractérisé en ce que le deuxième axe (38) est orienté perpendiculairement à la direction longitudinale de la partie (36) de guidage de cordon.

15. Système selon l'une quelconque des revendications 11 à 14 précédentes, caractérisé en ce que le moyen de détermination (26) détecte un déplacement angulaire autour du premier axe (22) du bloc (20) de guidage de cordon par rapport au corps de base.

16. Système selon la revendication 14, caractérisé en ce que le moyen de détermination (26, 28) comprend un détecteur de rotation (16) possédant deux parties qui peuvent tourner l'une par rapport à l'autre, dont une première partie est attachée au corps de base (2) et une deuxième partie est attachée au bloc (20) de guidage de cordon.

17. Procédé permettant d'explorer une surface de tuyaux, de tambours et de réservoirs, par exemple, au moyen d'un capteur (82), le capteur (82) étant déplacé à la main, le procédé étant caractérisé en ce que les positions de parties de surface qui sont explorées par le capteur (82) sont enregistrées ;
- les positions enregistrées sont présentées sur un dispositif d'affichage (90), ce qui permet à la personne manipulant le capteur (82) de voir quelles positions de la surface (80) ont été explorées et quelles positions sont encore à explorer ; et
- les positions enregistrées sont présentées sur le dispositif d'affichage avec les résultats de mesure de la surface obtenus par le capteur (82).
